Europäisches Patentamt

European Patent Office

Office européen des brevets

(19)

(11) Numéro de publication: **0 198 782**
**B1**

(12) # FASCICULE DE BREVET EUROPEEN

(45) Date de publication du fascicule du brevet:
**20.12.89**

(21) Numéro de dépôt: **86460002.8**

(22) Date de dépôt: **14.03.86**

(51) Int. Cl.⁴: **F 16 L 9/08, F 16 L 3/00**

(54) **Tuyau en béton muni d'anneaux de préhension.**

(30) Priorité: **14.03.85 FR 8503918**

(43) Date de publication de la demande:
**22.10.86 Bulletin 86/43**

(45) Mention de la délivrance du brevet:
**20.12.89 Bulletin 89/51**

(84) Etats contractants désignés:
**AT BE CH DE GB IT LI LU NL SE**

(56) Documents cités:
**CH-A- 292 336**
**GB-A- 964 653**
**US-A- 4 053 134**

(73) Titulaire: **Pacchiarotti, Louis, Les Cinq Chemins St Michel des Loups, F-50740 Carolles (FR)**

(72) Inventeur: **Pacchiarotti, Louis, Les Cinq Chemins St Michel des Loups, F-50740 Carolles (FR)**

(74) Mandataire: **Le Guen, Louis François, CABINET Louis LE GUEN 38, rue Levavasseur B.P. 91, F-35802 Dinard Cédex (FR)**

## Description

La présente invention concerne un tuyau en béton coulé dans un moule, ainsi que le procédé de fabrication dudit tuyau.

On connaît bien les tuyaux en béton coulé comportant un bout mâle et un bout femelle, et que l'on assemble, pour construire des conduites d'assainissement, par exemple. La manutention de ces tuyaux, particulièrement au cours de l'assemblage de la conduite, est délicate. En effet, de simples élingues passées autour du tuyau ne constituent qu'un moyen peu sûr. Il faut pouvoir passer la ou les élingues sous le cylindre de révolution que constitue le tuyau. Une fois le tuyau posé, il faut pouvoir tirer la ou les élingues de dessous le tuyau. Au cours de la manipulation, les élingues peuvent glisser en laissant le tuyau tomber sur l'un de ses bouts qui risque d'être endommagé. Toujours, au cours de la pose, les élingues ne servant à rien pour pousser le tuyau longitudinalement et présenter son bout mâle contre le bout femelle du tuyau précédent. Il faut, pour effectuer cette opération, utiliser d'autres moyens, tels qu'une barre à mine mise en face du bout femelle et tirée vers le tuyau précédent par des câbles et un tendeur.

Dans le document GB-A 964 653, il est prévu, des simples trous diamétralement opposés, ce qui nécessite un équipement spécifique de levage. Le levage des tuyaux s'effectue en position verticale.

Dans le document CH-A 292 336, il est prévu des poignées pour lever des tuyaux en position verticale.

Un objet de l'invention consiste à prévoir des moyens solidaires du tuyau qui permettent de soulever celui-ci horizontalement, de le reposer horizontalement de le déplacer longitudinalement et de contribuer à sa mise en place, tout en permettant la fabrication du tuyau dans le même moule que précédemment.

L'objet de l'invention mentionné ci-dessus, ainsi que d'autres, sont atteints par la mise en œuvre de combinaisons de moyens définies dans la revendication 1. Des mesures préférentielles sont indiquées dans les revendications dépendantes.

L'invention se rapporte également à un procédé tel que décrit dans la revendication 4.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 est une vue en coupe transversale d'un tuyau équipé de poignées suivant l'invention, et

la Fig. 2 est une vue en coupe longitudinale partielle du tuyau de la Fig. 1, illustrant notamment le montage de la cuvette d'encastrement d'une poignée.

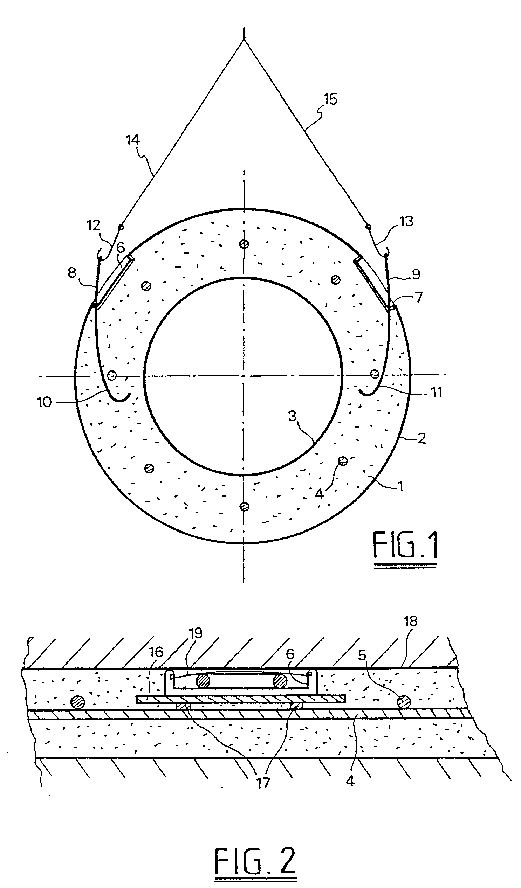

Aux Figs. 1 et 2 est montré, en coupe, un tuyau en béton armé 1 avec sa surface latérale externe 2, sa surface latérale interne 3, ses fers d'armature longitudinaux 4 et ses fers d'armature circulaire 5. Bien entendu, les formes des bouts du tuyau sont différentes et présentent un bout mâle et un bout femelle.

A la surface 2 du tuyau, sont prévues deux cuvettes 6 et 7 qui sont encastrées dans la surface du tuyau et dans lesquelles se logent des poignées ou anneaux de préhension 8 et 9. Les anneaux 8 et 9 sont, de préférence, métalliques et sont prolongés, à travers les parois des cuvettes 6 et 7, par des fers 10 et 11 qui sont noyés dans la masse de la paroi du tuyau. L'angle des rayons joignant l'axe du tuyau aux cuvettes 6 et 7 est ouvert vers le haut, symétrique par rapport au plan vertical passant par l'axe du tuyau, quand on regarde la Fig. 1, et a une valeur de l'ordre de 90°. Quand une seule paire d'anneaux est prévue, ce qui est le cas en général, le plan transversal contenant les cuvettes est au milieu de la longueur du tuyau.

A la Fig. 1, les anneaux 8 et 9 sont montrés sortis des cuvettes 6 et 7 et des crochets 12 et 13 reliés à des élingues 14 et 15 y sont accrochés.

La Fig. 2 montre comment une cuvette d'encastrement 6 ou 7 est fixée à l'armature du tuyau 1. Le fond de la cuvette 6 est fixé sur une plaquette métallique 16 qui, elle-même, est soudée à un fer d'armature longitudinal 4, directement ou, éventuellement, par l'intermédiaire de cales 17. Les épaisseurs de la plaquette 16 et des cales 17 sont prévues telles que les bords externes de la cuvette 6 portent contre la paroi du moule externe 18, de manière qu'au coulage, le béton ne pénètre pas dans la cuvette 6. A la Fig. 2, l'anneau 8 est en place dans sa cuvette d'encastrement 6.

Bien entendu, le matériau constituant les anneaux 8 et 9 et les dimensions de ceux-ci doivent être appropriés pour que la manutention des tuyaux 1 se fasse en toute sécurité. Les cuvettes 6 et 7 peuvent, quant à elles, être en plastique.

Eventuellement, les petits côtés des cuvettes 6 et 7 peuvent comporter chacun un petit creux, chacun destiné à recevoir une extrémité d'une tige flexible 19 maintenant les anneaux 8 et 9 bien encastrés dans les cuvettes 6 et 7 avant le coulage du béton. Ceci permet notamment de prévoir que les anneaux sortent d'eux-mêmes des cuvettes 6 et 7, par élasticité, une fois le tuyau 1 sorti du moule.

Pour les tuyaux de faible poids et de faibles dimensions, un seul anneau de préhension peut être prévu.

Toujours dans le cas de tuyaux de faible poids et de faibles dimensions, les extrémités des fers 10 et 11 d'ancrage des anneaux peuvent être simplement noyées dans le béton, sans être rendues solidaires de l'armature. Par contre, pour des tuyaux très lourds, lesdites extrémités des fers 10 et 11 peuvent être réunies.

A la Fig. 2, on a fait figurer entre les cales 17 et le fond de la cuvette 6 une plaquette métallique 16 qui est en fait facultative.

Evidemment, le dispositif de l'invention peut être appliqué à d'autres objets en béton tels que des panneaux, cuves, etc.

## Revendications

1. Tuyau en béton coulé dans un moule et destiné à être manipulé horizontalement, comportant, sensiblement dans son plan transversal médian un moyen d'accrochage, caractérisé en ce que ledit moyen d'accrochage comprend au moins une poignée ou un anneau métallique (8, 9) qui est prolongé par des fers (10, 11) noyés dans la paroi du tuyau, à chaque poignée ou anneau (8) étant associée une cuvette d'encastrement (6, 7) dans laquelle ladite poignée ou anneau s'escamote, les bords de la cuvette étant appliqués contre le moule lors de la fabrication du tuyau.

2. Tuyau en béton selon la revendication 1, caractérisé en ce que les fers (10, 11) sont reliés à l'armature (4, 5) du tuyau.

3. Tuyau en béton selon la revendication 1 ou 2, caractérisé en ce qu'il comporte deux poignées ou anneaux métalliques (8, 9), l'angle entre les droites joignant les cuvettes associées auxdites poignées à l'axe longitudinal du tuyau étant sensiblement égal à 90°.

4. Procédé de fabrication d'un tuyau en béton selon l'une des revendications 1 à 3, caractérisé en ce qu'est fixée sur l'armature (4, 5) du tuyau une cuvette d'encastrement (6, 7) dans laquelle se loge une poignée ou anneau (8, 9) prolongée à travers un trou dans la paroi de la cuvette (6, 7) par des fers d'ancrage (10, 11) dont les extrémités libres s'accrochent dans l'armature (4, 5), les bords externes de la cuvette d'encastrement (6, 7) étant plaqués contre la surface du moule externe (18) pendant la coulée du béton.

## Patentansprüche

1. Betonrohr, das in eine Form gegossen ist und horizontal gehandhabt wird, und das ferner im wesentlichen in seiner mittleren Querebene Kupplungseinrichtungen aufweist, dadurch gekennzeichnet, dass diese Kupplungseinrichtungen wenigstens einen Handgriff oder einen Metallring (8, 9) umfassen, der durch Eisenstücke (10, 11) verlängert ist, die in die Wand des Rohres eingebettet sind, dass ferner jeder Handgriff oder Ring mit einer ihm zugeordneten, vertieften Schale (6, 7) versehen ist, in welche der Handgriff oder der Ring eingezogen ist, und dass die Ränder der Schale an der Form während der Herstellung des Rohres angebracht werden.

2. Betonrohr nach Anspruch 1, dadurch gekennzeichnet, dass die Eisenstücke (10, 11) mit der Bewehrung (4, 5) des Rohres verbunden sind.

3. Betonrohr nach Anspruch 1 oder 2, dadurch gekennzeichnet, dass zwei Handgriffe oder Metallringe (8, 9) vorgesehen sind und dass der Winkel zwischen den geraden Linien, welche die den Handgriffen zugeordneten Schalen in der Längsachse des Rohres verbinden, im wesentlichen 90° sind.

4. Verfahren zur Herstellung eines Betonrohres nach einem der Ansprüche 1–3, dadurch gekennzeichnet, dass eine vertiefte Schale (6, 7) an der Bewehrung (4, 5) des Rohres befestigt wird, in welcher ein Handgriff oder Ring (8, 9) angeordnet ist, der sich durch eine Öffnung in der Wand der Schale (6, 7) erstreckt und zwar mittels Verankerungseisen (10, 11), deren freie Enden in die Bewehrung (4, 5) eingehängt sind, und dass die äusseren Ränder der vertieften Schalen (6, 7) an der Oberfläche der äusseren Form (18) während des Giessens des Betons angebracht sind.

## Claims

1. Concrete pipe cast in a mould and intended to be manipulated horizontally, comprising, substantially in its transverse median plane, means of engagement, characterised by the said means of engagement including at least a handle or a metal ring (8, 9) which is extended by irons (10, 11) embedded in the wall of the pipe, each handle or ring having associated with it a recessing basin (6, 7) into which the said handle or ring retracts, the rims of the basin being applied to the mould during the manufacture of the pipe.

2. Concrete pipe in accordance with claim 1, characterised by the irons (10, 11) being connected to the reinforcement (4, 5) of the pipe.

3. Concrete pipe in accordance with claim 1 or 2, characterised by comprising two handles or metal rings (8, 9), the angle between the straight lines joining the basins associated with the said handles in the longitudinal axis of the pipe being substantially 90°.

4. Process for manufacturing a concrete pipe in accordance with one of the claims 1 to 3, characterised by a recessed basin (6, 7) being attached to the reinforcement (4, 5) of the pipe, in which a handle or ring (8, 9) is accommodated, extended through an aperture in the wall of the basin (6, 7) by anchorage irons (10, 11) of which the free ends engage in the reinforcement (4, 5), the external rims of the recessing basin (6, 7) being affixed on the surface of the external mould (18) during the casting of the concrete.

FIG.1

FIG. 2

5